(19) Europäisches Patentamt
European Patent Office
Office européen des brevets

(11) Publication number: 0 027 709
B1

(12) # EUROPEAN PATENT SPECIFICATION

(45) Date of publication of patent specification: 04.07.84

(51) Int. Cl.³: C 09 D 11/02

(21) Application number: 80303601.1

(22) Date of filing: 13.10.80

(54) **An ink for a printer using liquid ink.**

(30) Priority: 17.10.79 JP 133824/79

(43) Date of publication of application: 29.04.81 Bulletin 81/17

(45) Publication of the grant of the patent: 04.07.84 Bulletin 84/27

(84) Designated Contracting States: CH DE FR GB IT LI NL SE

(56) References cited:
FR - A - 2 388 870
GB - A - 1 359 350

(73) Proprietor: EPSON CORPORATION
3-5, 3-chome, Owa
Suwa-shi Nagano-ken (JP)

(72) Inventor: Owatari, Akio
80 Hirookaharashinden Oaza
Shiojiri-shi Nagano-ken (JP)
Inventor: Yamada, Yuki
80 Hirookaharashinden Oaza
Shiojiri-Shi Nagano-ken (JP)

(74) Representative: Caro, William Egerton et al,
J. MILLER & CO. Lincoln House 296-302 High Holborn
London WC1V 7JH (GB)

**The file contains technical information submitted after the application was filed and not included in this specification**

EP 0 027 709 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to ink for printers using liquid ink and in particular, although not so restricted, to ink jet printers.

An ink jet printer produces minute droplets of ink with a diameter of 50 μm to 150 μm and ejects the droplets in predetermined positions on recording paper. In an electrostatic deflection ink jet printer droplets are ejected from a nozzle orifice having a diameter of 30 μm to 150 μm, the ink droplets are electrically charged, and controlled by an electric field to form dots at predetermined positions on the recording paper. In an impulse jet printer ink droplets are ejected from a plurality of nozzle orifices to form dots directly in the required positions on the recording paper.

These types of ink jet printer suffer from the following defects:

1. Known inks dry at the nozzle orifice so that the nozzle orifice clogs: this occurs when the viscosity of the ink around the nozzle orifice is high or when dye in the ink separates out.

2. Known inks take a relatively long time to dry when a dot has been formed on the recording paper.

3. Air bubbles entrained in known inks or gas produced thereby prevent the ink from being pressurised sufficiently to form the ink droplets at the nozzle orifice.

4. A dot of known ink on the recording paper has neither sufficient roundness nor enough contrast.

Taking these problems into consideration, it is desirable that ink for an ink jet printer has the following characteristics:

(a) Will not clog the nozzle orifice.
(b) Will dry as soon at is forms dots on the recording paper.
(c) Does not include a component which generates gas.
(d) Does not change its quality with time and is stable when stored.
(e) Does not corrode materials which it comes into contact with.
(f) Has a high density and produces round contrasting dots on the recording paper.

Some of these characteristics are contradictory. For example, the ink that dries quickly on contact with the recording paper will tend to dry in the nozzle orifice and clog it. Therefore, up until now no ink has all the above characteristics (a) to (f).

To overcome the disadvantages of known inks, the tendency has been not to change the characteristics of the ink but to modify the ink jet printer. For example, either a dryer is provided or absorbent recording paper is used in order to shorten the time for drying the ink. However, the provision of a dryer increases the size of the ink jet printer and makes is uneconomical from the point of view of energy consumption. Moreover it is convenient to have to use the ink jet printer with a specific special type of paper.

Known inks for ink jet printers are, in the main, water-based and have three main consituents, namely, a dye, a wetting agent and water. The dye is important for colouring the recording paper so that printing is visible. Water is a carrying medium for the dye. Theoretically, therefore, the ink only needs two components ie. water and a dye. However, the nozzle orifice is exposed to atmosphere so that the water evaporates, the dye separates out from the ink and clogs the nozzle orifice and to prevent this the wetting agent is added. It is known that the wetting agent causes the vapour pressure of the ink to fall so as to prevent the dye separating out in the nozzle orifice to some extent and the ink does not dry quickly so that clogging in the nozzle orifice is prevented. On the otherhand, the ink also does not dry quickly on the recording paper. In order to cause the ink to dry quickly on the recording paper surface active agents have been added to known inks. This causes the surface tension of the ink to fall so that it penetrates the recording paper. However, such ink penetrates fibres of the recording paper so the roundness of dots formed is not adequate and print quality is reduced.

According to the present invention there is provided an ink composition including an effective amount of a component capable of dissolving at least one of a fibrous material, sizing material and a surface treatment present in a recording medium to permit the ink to penetrate the recording medium comprising: a water-soluble dye; a wetting agent consisting of one or more of an aliphatic polyhydric alcohol, an alkylether derivative of an aliphatic polyhydric alcohol and an acetate derivative of an aliphatic polyhydric alcohol; a strong basic alkali metal hydroxide; and water; characterised in that the composition has a pH in the range of 12 to 14 at 20°C.

Normal recording paper is made from pulp. Pulp is hydgroscopic and absorbs water readily. Therefore, either a sizing material is used in the manufacture of recording paper to decrease its absorbency or the recording paper is coated with a coating material to give a smooth surface again to decrease its absorbency. It has now been found by study that by dissolving the sizing material and/or the surface coating material ink will penetrate the recording paper quickly. Moreover, it has been found that ink dries very quickly when it has a pH in the range of 12 to 14 and preferably 12.0 to 13.5. The roundness of dots formed has been found to be satisfactory.

The accompanying drawing is a graph showing the relationship between the pH of ink and the time required for ink to dry on various recording papers A to E at a temperature of 20°C. The time required for a printed dot of ink to dry is indicated in the drawing and is the time from when the nozzle

orifice (diameter 40 $\mu$m) producing an ink droplet of diameter 80 $\mu$m ejects ink to form a dot on recording paper to when a hand which touches the dot is not soiled or in turn the recording paper is not marked.

As shown in the drawing, the time for the ink to dry is remarkably short when its pH is in the range 12 to 13.5 showing small variation with the various types of recording paper. Further, the quality of printing compared to that produced with known inks is superior. Moreover the dots formed by ink according to the present invention have been found to be perfectly round. The time taken for the dot to dry is dependent not only on the type of recording paper but also on the pattern of printing and the quantity of ejected ink. It has been found that the time taken for ink according to the present invention to dry varies with pH but the drying characteristics of ink according to the present invention are superior to those of known inks when the same pattern is printed using the same quantity of ink and on the same recording paper.

The strong basic alkali metal hydroxide may be sodium hydroxide or potassium hydroxide, which dissolve readily in water and the wetting agent, and are highly stable. 0.05 to 10 parts by weight (preferably 0.05 to 3.5 parts by weight) of a 10 N solution of the strong basis alkali metal hydroxide achieves the required pH.

An alkaline metal hydroxide such as potassium or potassium hydroxide has a tendency to react with a wetting agent such as glycerine to produce the alkoxide. In an experiment 3 parts by weight of a 10 N solution of sodium hydroxide and potassium hydroxide were added to 15% of an aqueous glycerine solution. The mixture was placed in a tube made of vinyl chloride (diameter 1 mm) and after 3 days, sodium alkoxide and potassium alkoxide were found present in the tube, and in particular a sodium alkoxide gel was deposited in the tube. On the other hand, potassium alkoxide is liquid, which is preferable when the ink is required to be stable at relatively high temperatures. However, it has been found that both hydroxides do not easily produce their alkoxide at normal room temeratures and therefore when stability at high temperature is of no concern sodium hydroxide is used in preference to potassium hydroxide since it is less corrosive.

Dyes such as water soluble dyes and dispersion dyes may be used in an ink according to the present invention to increase the water fastness and light fastness. A dye which is soluble or highly dispersible in water or in wetting agent tends not to separate out or clog the nozzle orifice of an ink jet printer. For example dyes such as the following may be used in an ink according to the present invention:

Kayaku Direct Deep Black xA

Kayaku Direct Special Black AxN

Kayaset Black 009A

Kayaset Black 010

Kayaset Black 014

Kayaset Black 015

Kayaset Black 021

Kayaset Violet 001

Kayaset Blue 005

Kayarus Turquoise Blue GL

(These are all trade marks of dyes made by Nippon Kayaku)

The amounts of dye added to the ink is preferably less than 10 parts by weight to prevent clogging of the nozzle orifice.

The wetting agent reduces the vapour pressure of the ink and reduces the speed of evaporation of water in the ink. Further, it dissolves the dye and the basic material to some extent and so it prevents the nozzle orifice from being clogged. A wetting agent which is easily soluble in water, is hygroscopic and dissolves dye and the basic material to a high degree is preferred. The wetting agent may thus be an aliphatic polyhydric alcohol, an alkyl ether derivative of an aliphatic polyhydric alcohol, or an acetate derivative of an aliphatic polyhydric alcohol, for example, the wetting agent may be a polyhydric alcohol such as ethylene glycol, diethylene glycol, triethylene glycol, propylene glycol, polyethylene glycol, and glycerine, the alkyl ether derivative of a polyhydric alcohol such as ethylene glycol monomethyl ether, ethylene glycol monoethyl ether, diethylene glycol monoethyl ether, diethylene glycol monobutyl ether, diethylene glycol dimethyl ether, diethylene glycol methyl ethyl ether or triethylene glycol monomethyl

ether, and the acetate derivative of a polyhydric alcohol such as ethylene glycol monomethyl ether acetate, diethylene glycol monoethyl ether acetate, glyceryl monoacetate or glyceryl diacetate.

In addition mixtures of polyhydric alcohols, alkyl ether derivatives of polyhydric alcohols and acetate derivatives of polyhydric alcohols can be used.

The amount of wetting agent in an ink according to the present invention is an important factor in determining its viscosity. When there is a large amount of wetting agent the viscosity of the ink is too high which is undesirable. It has been found by the present inventors that the response time of an ink jet printer deteriorates and the driving voltage is increased when the viscosity of the ink is too high. Therefore from 5 to 45 parts by weight of wetting agent are preferable for an ink according to the present invention so the viscosity is in the range 1.2 cP to 19 cP.

A hydroxy alkyl-2-pyrrolidone compound which is shown by the general formula:

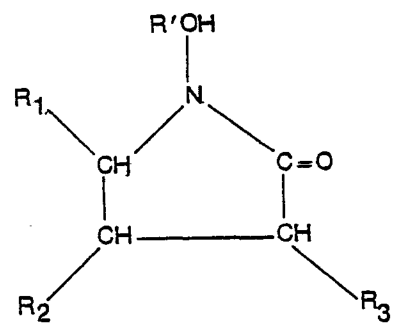

or an N-alkyl-2-pyrrolidone compound which is shown by the general formula:

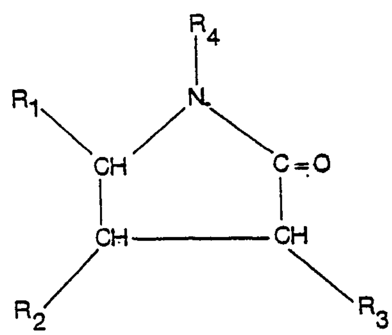

where R′ is an alkylene group and $R_1$, $R_2$, $R_3$. $R_4$ are alkyl groups and may be the same or different and may be added to an ink according to the present invention. It has been found that the addition of these compounds in an amount of 1 to 16 parts by weight improves the prevention of clogging of the nozzle orifice.

Further, in order to prevent the ink from going mouldy or breeding microbes during long periods of storage, a conventional antimould agent such as dioxin or sodium dehydroacetic acid may be added to the ink. However, when an ink according to the present invention has a high pH it is found that it does not have a tendency to go mouldy.

The speed of penetration of ink according to the present invention into recording paper may be increased by the addition of a surface active agent. Thus a fluorocarbon surfactant having high resistance to alkali may be added to the ink. Additionally or alternatively conventional non-ionic surface active agents or anionic surface active agents may be added. The surface tension of an ink according to the present invention is preferably in the range 21 to 48 mN/m when the surface active agent is added so that the ink on the recording paper dries more rapidly. However, surface active agents whose contact angle with the recording paper is small, such as sodium oleate and dioctyl sulphosuccinate penetrate the recording paper too thoroughly and so cause the ink to spread and consequently are not found to be suitable in practice because they do not produce print of good quality. When 0.001 to 0.1 parts by weight of surface active agent e.g. FC—128 (trade mark of Sumito 3M Company) is added to an ink according to the present invention it dries on the recording paper more rapidly.

Inks according to the present invention are suitable not only with ink jet printers as described but also other types of printers which use liquid ink.

The invention is further illustrated with reference to the following examples.

Example 1

809 g of distilled water and 150 g of glycerine were placed in a 2 liter beaker equipped with a stirrer, and were stirred. The 1 g of sodium dehydroacetic acid was added slowly. 40 g of sodium hydroxide were slowly added with cooling to 100 cc of distilled water so as to dissolve and produce a 10 N solution of sodium hydroxide. 20 g of this sodium hydroxide solution was added to the 2 litre beaker. 20 g of Kayaku Direct Deep Black x A was then slowly added and stirred for six hours maintaining the temperature at 60°C. The beaker and contents were then cooled to room temperature and then filtered through a membrane filter (produced by the Milipore Corpn.) having a pore size of 1 μm. The ink obtained had the following composition:

| | |
|---|---|
| Kayaku Direct Deep Black x A | 2 parts by weight |
| Glycerine | 15 parts by weight |
| 10 N sodium hydroxide | 2 parts by weight |
| Sodium dehydroacetic acid | 0.1 parts by weight |
| Distilled water | 80.9 parts by weight |

The viscosity of the ink was 1.8 cP at 20°C, the surface tension was 54 mN/m at 20°C and the pH was 12.4 at 20°C.

This ink was used in an ink jet printer having a nozzle orifice with a diameter of 40 μm. High quality black printing on recording paper was obtained. The time required for the ink to dry on the recording paper was about 5 seconds.

Example 2

An ink having the following composition was made in accordance with the process described in Example 1:

| | |
|---|---|
| Kayaku Direct Special Black A x N | 2 parts by weight |
| Glycerine | 5 parts by weight |
| Triethylene glycol | 10 parts by weight |
| 10 N potassium hydroxide | 2 parts by weight |
| Sodium dehydroacetic acid | 0.1 parts by weight |
| Distilled water | 80.9 parts by weight |

The viscosity of this ink was 1.9 cP at 20°C, the surface tension was 52 mN/m at 20°C and the pH was 12.4 at 20°C.

Example 3

An ink having the following composition was made in accordance with the process described in Example 1:

| | |
|---|---|
| Kayaset Black 021 | 1 part by weight |
| Glycerine | 6 parts by weight |
| Glycerin monoacetate | 10 parts by weight |
| 10 N potassium hydroxide | 3 parts by weight |
| Sodium dehydroacetic acid | 0.1 parts by weight |
| Distilled water | 79.9 parts by weight |

The viscosity of this ink was 1.8 cP at 20°C, the surface tension was 46 mN/m at 20°C and the pH was 12.5 at 20°C.

Example 4

An ink having the following composition was made in accordance with the process described in Example 1:

| | |
|---|---|
| Kayaku Direct Special Black AxN | 2 parts by weight |
| Glycerine | 4 parts by weight |
| Triethylene glycol | 12 parts by weight |
| N-methyl-2-pyrrolidone | 5 parts by weight |
| 10 N sodium hydroxide | 2 parts by weight |
| Sodium dehydroacetic acid | 0.1 parts by weight |
| Distilled water | 74.9 parts by weight |

The viscosity of this ink was 2.0 cP at 20°C, the surface tension was 51 mN/m at 20°C and the pH was 12.4 at 20°C.

Example 5

An ink having the following composition was made in accordance with the process described in Example 1:

| | |
|---|---|
| Kayaset Violet 011 | 2 parts by weight |
| Glycerine | 4 parts by weight |
| Triethylene glycol | 20 parts by weight |
| 10 N sodium hydroxide | 3 parts by weight |
| FC—128 (fluorocarbon surfactant made by Sumitomo 3M Company) | 0.01 parts by weight |
| Distilled water | 70.99 parts by weight |

The viscosity of this ink was 2.2 cP at 20°C, the surface tension was 28 mN/m at 20°C and the pH was 12.5 at 20°C.

Example 6

An ink having the following composition was made in accordance with the process described in Example 1:

| | |
|---|---|
| Kayaku Direct Deep Black xA | 2 parts by weight |
| Glycerine | 5 parts by weight |
| Trimethylene glycol | 10 parts by weight |
| 10 N sodium hydroxide | 2 parts by weight |
| Sodium dehydroacetic acid | 0.1 parts by weight |
| Distilled water | 80.9 parts by weight |

The viscosity of this ink was 1.9 cP at 20°C, the surface tension was 52 mN/m at 20°C and the pH was 12.4 at 20°C.

The inks of Examples 1 to 6 were used with an ink jet printer havin a nozzle orifice with a diameter of 40 $\mu$m. Printing density and quality produced on recording paper were high and moreover the ink dried within 5 seconds. No problems of clogging of the nozzle orifice were experienced. After printing for 1 hour, the nozzle orifice was exposed to air for 72 hours but no clogging was recorded when the ink was again ejected from the nozzle orifice. Further, the inks of Examples 2 to 5 showed the same result when exposed to air for 144 hours.

**Claims**

1. A liquid ink composition including an effective amount of a component capable of dissolving at least one of a fibrous material, sizing material and a surface treatment material present in a recording medium to permit the ink to penetrate the recording medium, comprising: a water-soluble dye; a wetting agent consisting of one or more of an aliphatic polyhydric alcohol, an alkylether derivative of an aliphatic polyhydric alcohol and an acetate derivative of an aliphatic polyhydric alcohol; a strong basic alkali metal hydroxide; and water; characterised in that the composition has a pH in the range 12 to 14 at 20°C.

2. An ink composition as claimed in claim 1 characterised by comprising no more than 10 parts by weight of the water soluble dye, 0.001 to 15 parts by weight of the strong basic alkali metal hydroxide and 5 to 45 parts by weight of the wetting agent.

3. An ink composition as claimed in claim 1 or 2 characterised by having a surface tension in the range 21 mN/m to 48 mN/m at 20°C.

4. An ink composition claimed in any preceding claims characterised by including 0.001 to 0.1 parts by weight of a surface active agent.

5. An ink composition claimed in any preceding claim characterised by including 1 to 6 parts by weight of:

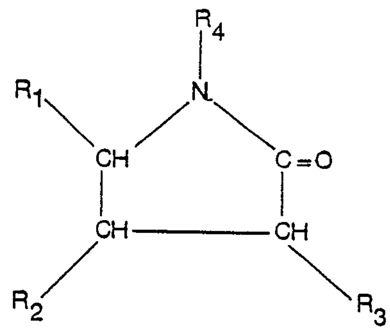

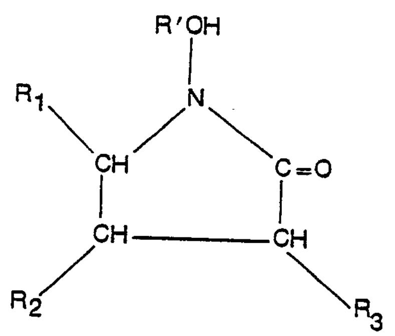

where R′ is an alkylene group $R_1$, $R_2$, $R_3$ and $R_4$ are alkyl groups and may be the same or different.

6. An ink composition as claimed in any preceding claim characterised by having a viscosity in the range 1.2 cP to 19 cP at 20°C.

7. An ink composition as claimed in any preceding claim characterised by including sodium dehydroacetic acid.

**Patentansprüche**

1. Flüssige Tintenzusammensetzung mit einer wirksamen Menge eines Bestandteils, der wenigstens ein in einem Aufzeichnungsmedium vorhandenes Material aus der Gruppe Fasermaterial, Appreturmittel und Oberflächenbehandlungsmittel lösen kann, damit die Tinte das Aufzeichnungsmedium durchdringen kann, enthaltend: einen wasserlöslichen Farbstoff; ein Netzmittel bestehend aus einer oder mehrerer der Verbindungen aus der Gruppe aliphatischer mehrwertiger Alkohol, Alkylätherderivat eines aliphatischen mehrwertigen Alkohols und Essigsäurederivat eines aliphatischen mehrwertigen Alkohols; ein stark basisches Alkalimetallhydroxid; und Wasser; dadurch gekennzeichnet, daß die Zusammensetzung bei 20°C einen pH-Wert in Bereich von 12 bis 14 besitzt.

2. Tintenzusammensetzung nach Anspruch 1, dadurch gekennzeichnet, daß sie nicht mehr als 10 Gew.-Teile des wasserlöslichen Farbstoffs, 0,001 bis 15 Gew.-Teile des stark basischen Alkalimetallhydroxids und 5 bis 45 Gew.-Teile des Netzmittels enthält

3. Tintenzusammensetzung nach Anspruch 1 oder 2, dadurch gekennzeichnet, daß sie bei 20°C eine Oberflächenspannung im Bereich von 21 mN/m bis 48 mN/m besitzt.

4. Tintenzusammensetzung nach einem der vorhergehenden Ansprüche, dadurch gekennzeichnet, daß sie 0,001 bis 0,1 Gew.-Teile eines oberflächenaktiven Mittels enthält.

5. Tintenzusammensetzung nach einem der vorhergehenden Ansprüche, dadurch gekennzeichnet, daß sie 1 bis 6 Gew.-Teile von:

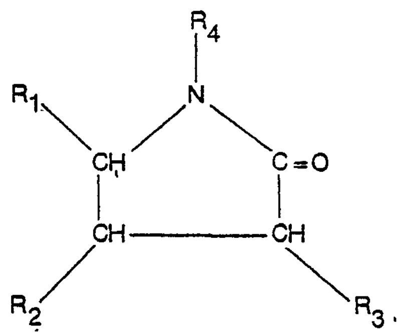

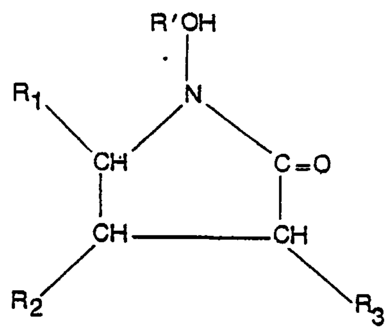

enthält, worin R' eine Alkylengruppe ist, une $R_1$, $R_2$, $R_3$ und $R_4$ gleiche oder verschiedene Alkylgruppen sind.

6. Tintenzusammensetzung nach einem der vorhergehenden Ansprüche, dadurch gekennzeichnet, daß sie bei 20° eine Viskosität von 1,2 cP bis 19 cP besitzt.

7. Tintenzusammensetzung nach einem der vorhergehenden Ansprüche, dadurch gekennzeichnet, daß sie wasserfreies Natriumacetat (sodium dehydroacetic acid) enthält.

**Revendications**

1. Composition d'encre liquide, comprenant une quantité efficace d'un constituant capable de dissoudre au moins une des matières suivantes: une matière fibreuse, une matière d'apprêt et un matière de traitement de surface présente dans un milieu pour enregistrement, afin de permettre à l'encre de pénétrer dans ce milieu pour enregistrement, cette encre comprenant un colorant hydro-soluble; un agent de mouillage consistant en un ou plusieurs des composés suivants: un polyalcool aliphatique, un éther alkylique dérivé d'un polyalcool aliphatique et un acétate dérivé d'un polyalcool aliphatique; un hydroxyde de métal alcalin fortement basique; et de l'eau, composition caractérisée en ce qu'elle présente un pH compris entre 12 et 14 à 20°C.

2. Composition d'encre selon la revendication 1, caractérisée en ce qu'elle ne comprend pas plus de 10 parties en poids du colorant hydro-soluble, 0,001 à 15 parties en poids de l'hydroxyde de métal alcalin fortement basique et 5 à 45 parties en poids de l'agent de mouillage.

3. Composition d'encre selon la revendication 1 ou 2, caractérisée en ce qu'elle présente une tension superficielle comprise entre 21 mN/m et 48 mN/m à 20°C.

4. Composition d'encre selon l'une quelconque des revendications précédentes, caractérisée en ce qu'elle comporte 0,001 à 0,1 partie en poids d'un agent tensio-actif.

5. Composition d'encre selon l'une quelconque des revendications précédentes, caractérisée en ce qu'elle comporte 1 à 6 parties en poids de:

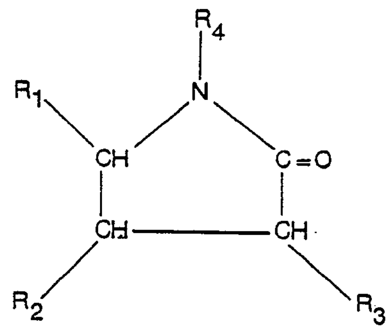

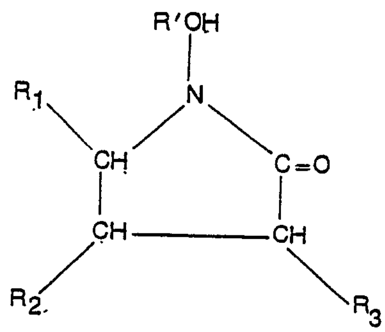

dans lesquelles R′ est un groupe alkylène, et $R_1$, $R_2$, $R_3$ et $R_4$ sont des groupes alkyles qui peuvent être identiques ou différents.

6. Composition d'encre selon l'une quelconque des revendications précédentes, caractérisée en ce qu'elle présente une viscosité comprise entre 1,2 cP et 19 cP à 20°C.

7. Composition d'encre selon l'une quelconque des revendications précédentes, caractérisée en ce qu'elle comprend du déhydroacétate de sodium.

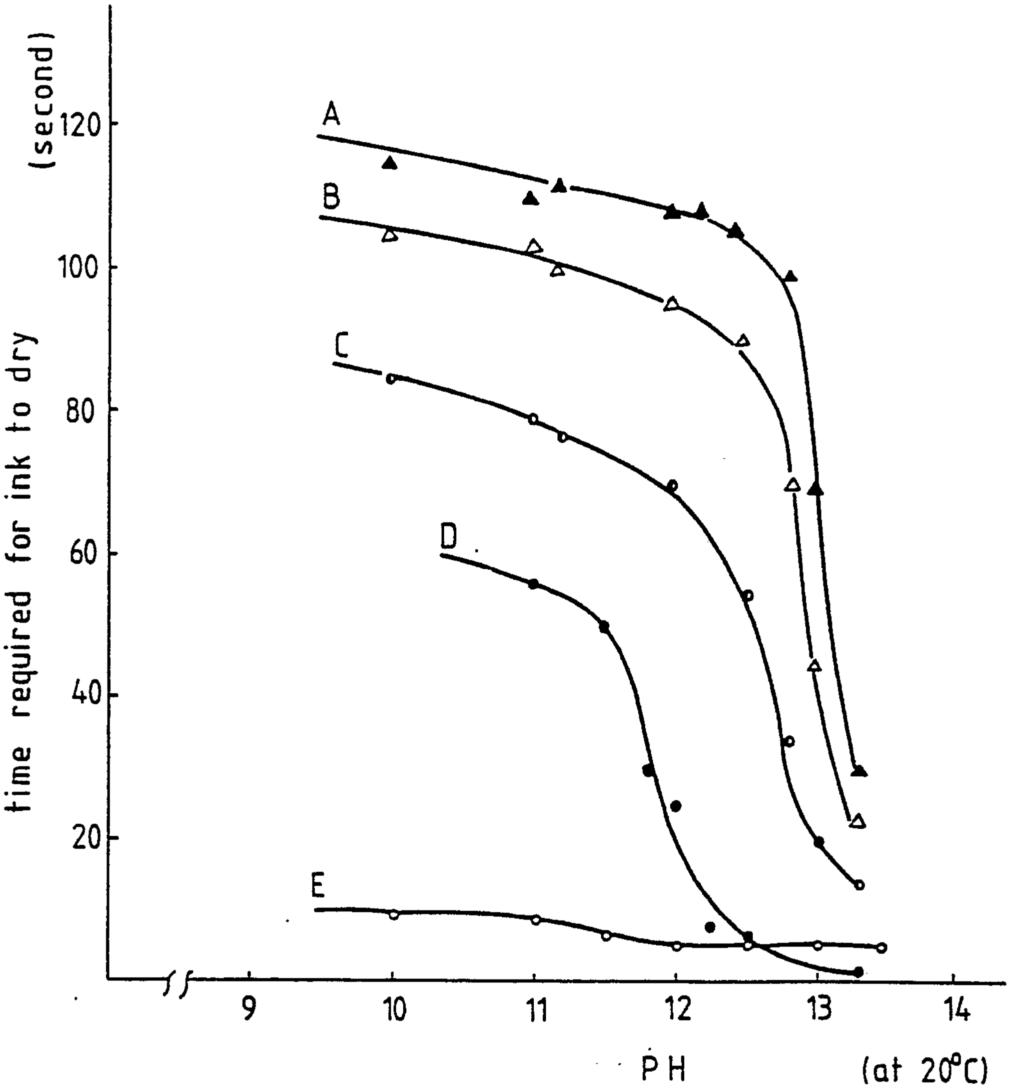

time required for ink to dry (second)
120
100
80
60
40
20
A
B
C
D
E
9
10
11
12
13
14
PH
(at 20°C)